# EUROPEAN PATENT APPLICATION

(11) **EP 4 790 940 A1**
(43) Date of publication of application: **12.08.2026**
(21) Application number: 25156185.8
(22) Date of filing: 06.02.2025
(51) Int. Cl.: H04L 5/00

(54) **EXTENDED SSB PERIODICITY AND FREQUENCY SYNCHRONIZATION RASTER**

(71) Applicant: Panasonic Intellectual Property Corporation of America, Torrance, CA 90504 (US)
(72) Inventor: KLENNER, Peter, 63225 Langen (DE); NISHIO, Akihiko, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

The disclosure relates to a user equipment, UE, and respective methods for the UE. Moreover, a network node and respective methods for the network node are provided. The UE comprises: circuitry which, in operation: obtains a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and a receiver, which, in operation, scans a resource based on the configuration for receiving a SSB.

## Description

### 1. Technical Field

The present invention relates to transmission and reception of system synchronization blocks in a cellular network. In particular, the present invention relates to apparatuses and methods that generate, signal, receive, and/or utilize a system synchronization block in a cellular network, for example, in a non-terrestrial network.

### 2. Description of the Related Art

Currently, the 3rd Generation Partnership Project (3GPP) works on the technical specifications for the next generation cellular technology, which is also called 5G (fifth generation).

One objective is to provide a single technical framework addressing all usage scenarios, requirements and deployment scenarios (see e.g. section 6 of 3GPP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

One notable feature of 5G is the introduction of non-terrestrial networks (NTN) including a satellite in the communication path between a user device and a network.

### SUMMARY

One non-limiting and exemplary embodiment facilitates efficient transmission and reception of system information relating to a non-terrestrial network.

In an embodiment, the techniques disclosed herein feature a user equipment (UE). The UE comprises a receiver and circuitry. The circuitry, which in operation: obtains a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency. The receiver, which in operation: scans a resource based on the configuration for receiving a SSB.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system.
- **Fig. 2**: is a schematic drawing that shows a functional split between NG-RAN and 5GC.
- **Fig. 3**: is a sequence diagram for RRC connection setup/reconfiguration procedures.
- **Fig. 4**: is a schematic drawing showing usage scenarios of Enhanced mobile broadband (eMBB), Massive Machine Type Communications (mMTC) and Ultra Reliable and Low Latency Communications (URLLC).
- **Fig. 5**: is a block diagram showing an exemplary 5G system architecture for a non-roaming scenario.
- **Fig. 6**: illustrates an exemplary NG RAN architecture based on a transparent satellite.
- **Fig. 7**: illustrates an exemplary NG RAN architecture based on a regenerative satellite.
- **Fig. 8**: illustrates an exemplary scenario where several UEs are served by a satellite.
- **Fig. 9**: illustrates an exemplary NTN setup with a satellite moving at a certain velocity.
- **Fig. 10**: illustrates a pattern of active cells in a beam-hopping scenario at a first time;
- **Fig. 11**: illustrates a pattern of active cells in a beam-hopping scenario at a second time;
- **Fig. 12**: is a scheme illustrating a frequency synchronization raster;
- **Fig. 13**: is a block diagram showing an exemplary structure of a user device and a network device.
- **Fig. 14**: provides a configuration for a frequency synchronization raster in a first exemplary implementation;
- **Fig. 15**: provides a configuration for a frequency synchronization raster in a second exemplary implementation;
- **Fig. 16**: is a scheme illustrating a frequency synchronization raster in the second exemplary implementation;
- **Fig. 17**: provides a configuration for a frequency synchronization raster in a third exemplary implementation;
- **Fig. 18**: is a scheme illustrating a frequency synchronization raster in the third exemplary implementation;
- **Fig. 19**: is a scheme illustrating a frequency synchronization raster in a fourth exemplary implementation;
- **Fig. 20**: is a flow diagram illustrating exemplary steps of scanning for a SSB based on multiple periodicities;
- **Fig. 21**: is a flow diagram illustrating the steps of scanning for a SSB for a legacy UE;
- **Fig. 22**: is a flow diagram illustrating the steps of scanning for a SSB based on a configuration for the synchronization raster for a UE;
- **Fig. 23**: is a flow diagram illustrating the steps of transmitting a SSB based on a configuration for the synchronization raster for a network node.

### DETAILED DESCRIPTION

### 5G NR system architecture and protocol stacks

3GPP has been working on the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

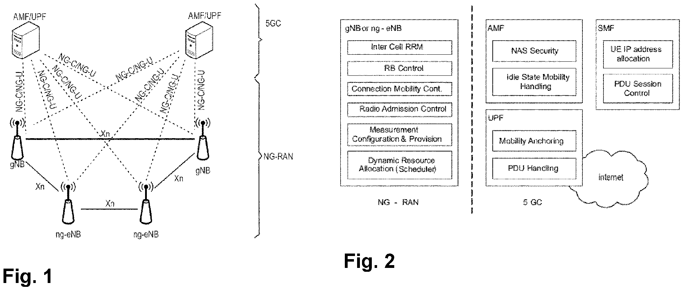

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.3.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5G NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

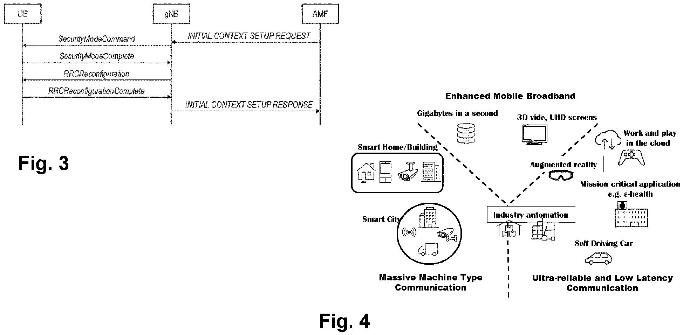

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core network (5GC) is provided that comprises control circuitry which, in operation, establishes a Next Generation (NG) connection with a gNB, and a transmitter which, in operation, transmits an initial context setup message, via the NG connection, to the gNB to cause a signaling radio bearer setup between the gNB and a user equipment (UE). In particular, the gNB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

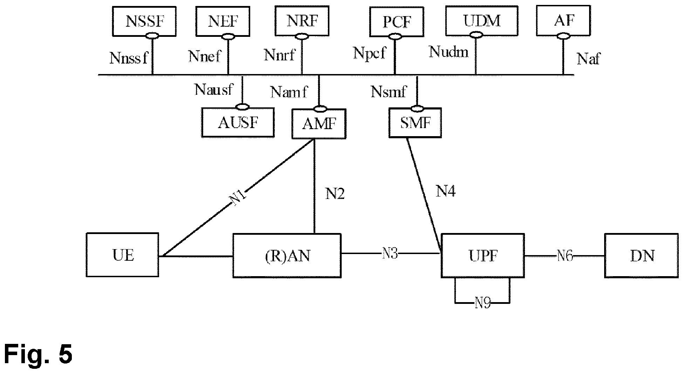

**Fig. 5** illustrates a 5G NR non-roaming reference architecture (see TS 23.501 v16.6.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNB and a UE in accordance with the QoS requirement and control circuitry, which, in operation, performs the services using the established PDU session.

### Non-Terrestrial Networks, NTN

Thanks to the wide service coverage capabilities and reduced vulnerability of space/airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability.

A non-terrestrial network refers to a network, or segment of networks using RF resources on board of a satellite, for instance. NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

In 3GPP, NR-based operation in a non-terrestrial network (NTN) is studied and described (see e.g. 3GPP TR 38.811, Study on New Radio (NR) to support non-terrestrial networks, version 15.4.0, and 3GPP TR 38.821, Solutions for NR to support non-terrestrial networks, version 16.0.0).

A non-terrestrial network (NTN) refers to a network, or segment of a network, using RF resources on board of an airborne or spaceborne entity for transmission, such as e.g.:
- Spaceborne vehicles: Satellites (including Low Earth Orbiting (LEO) satellites, Medium Earth Orbiting (MEO) satellites, Geostationary Earth Orbiting (GEO) satellites as well as Highly Elliptical Orbiting (HEO) satellites)
- Airborne vehicles: High Altitude Platforms (HAPs) encompassing Unmanned Aircraft Systems (UAS) including Lighter than Air UAS (LTA), Heavier than Air UAS (HTA), all operating in altitudes typically between 8 and 50 km, quasi-stationary.

Exemplary, a UAS or satellite platform is connected to the 5G network through one or several gateways linked to the data network. NTNs may comprise the following system elements: an NTN-capable terminal, which may refer to a 3GPP UE or a terminal that is specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the Gateway Center space/airborne platform. The platform can implement either transparent or regenerative payload transmissions, with the following exemplary characteristics.
- In the transparent payload, the platform acts as a repeater by filtering, converting, and amplifying the wave signal, while the payload is unchanged.
- In the regenerative payload, the platform has some or all of the base station functionalities. It may perform demodulation/modulation, switching/routing, coding/decoding in addition to radio frequency filtering, conversion and amplification.
- The Inter-satellite links (ISL) can optionally be used to form a constellation of satellites. ISL (Inter-Satellite Links) is a transport link between satellites.

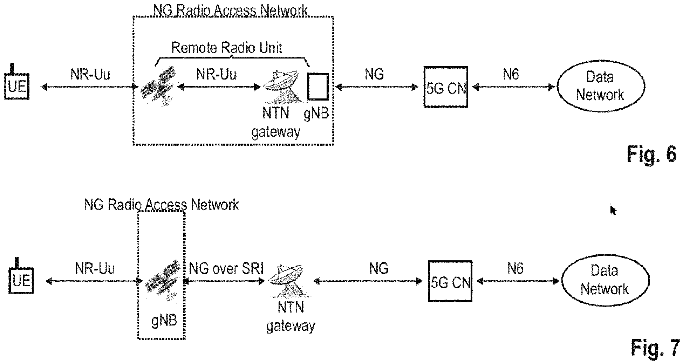

**Fig. 6** illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu. A satellite in this configuration is referred to as a transparent satellite.

**Fig. 7** illustrates a scenario of a non-terrestrial network, wherein a transmission between a terminal (UE) is performed via a satellite including a gNB as a scheduling device. A satellite in this configuration is referred to as a regenerative satellite. According to one exemplary implementation (see TR 38.321 section 5.2), the NG-RAN logical architecture as described in TS 38.401 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between the NTN GW and satellite.

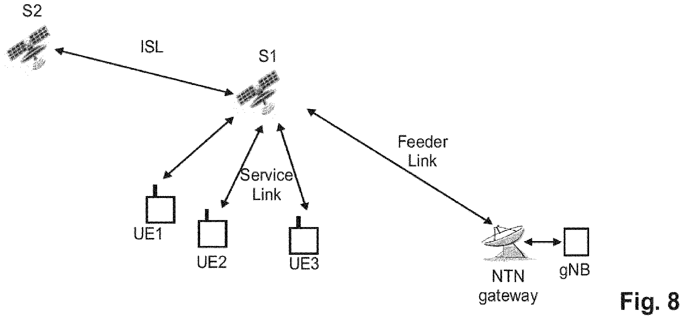

**Fig. 8** illustrates an exemplary scenario where three UEs (UE1, UE2, UE3) are served by a satellite S1. The satellite S1 is communicating via a feeder link with a gNB and NTN gateway as well as via an inter-satellite link (ISL) with another neighbor satellite S2.

There are different types of satellites that provide communications, Low-Earth Orbit (LEO) or Geosynchronous Equatorial Orbit (GEO) (also called geo-stationary) satellites. Geostationary satellites appear fixed as they move at the same angular velocity as the Earth and orbit along a path parallel to Earth's rotation, thereby providing coverage to a specific area. From the ground, GEO satellites appear to be stationary. LEO satellites revolve at an altitude between 160 to 2,000 kilometers (99 to 1,200 miles). A constellation of LEO satellites can provide continuous, global coverage as the satellites move. Unlike GEO satellites, LEO satellites also fly at a much faster pace because of their proximity to Earth.

There are many applications for GEO satellites, including weather forecasting, satellite radio, and television. Because GEO satellites orbit at such a high altitude, however, there is a longer communication time lag (latency) as the signals travel to and from these satellites. For this reason, many critical communications are handled over LEO satellite networks, which allow for faster connectivity without wires or cables.

However, in general, in the NTN, there may be various different kinds of platforms, including not only satellites but also UAS (Unmanned Aerial System) platforms, examples of which are listed in Table 1 (corresponding Table 4.1-1 of 3GPP TR 38.821, see also 3GPP TR 38.821, Section 4.1, Non-Terrestrial Networks overview):

**Table 1: Types of NTN platforms**

| Platforms | Altitude range | Orbit | Typical beam footprint size |
|---|---|---|---|
| Low-Earth Orbit (LEO) satellite | 300 - 1500 km | Circular around the earth | 100-1000 km |
| Medium-Earth Orbit (MEO) satellite | 7000 - 25000 km | | 100-1000 km |
| Geostationary Earth Orbit (GEO) satellite | 35 786 km | notional station keeping position fixed in terms of elevation/azimuth with respect to a given earth point | 200-3500 km |
| UAS platform (including High Altitude Platform Station (HAPS)) | 8 - 50 km (20 km for HAPS) | | 5 - 200 km |
| High Elliptical Orbit (HEO) satellite | 400 - 50000 km | Elliptical around the earth | 200-3500 km |

For LEO, MEO, and HEO satellites, which do not keep their position fixed with respect to a given earth point, a satellite beam, which corresponds to a cell or PCI (Physical Cell ID) or to an SSB (Synchronization Signal Block) beam of the NR wireless system may be moving over the earth.

An NTN scenario that provides cells which are continuously moving on the Earth (e.g. a LEO, MEO, or HEO based NTN), is referred to as an earth moving cell scenario. The continuous cell motion on the Earth is due to the operation where the satellite beam is fixed with respect to the NTN platform. Therefore, the footprint of the cell, which may correspond to several satellite beams or one satellite beam, slides on the earth surface with the motion of the NTN platform (e.g. a LEO satellite).

Information about the orbital trajectories of satellites is contained in ephemeris data (or "satellite ephemeris data"). There are different possible representations of ephemeris data, wherein one possibility is to use orbital parameters such as semi-major axis, eccentricity, inclination, right ascension of the ascending node, argument of periapsis, mean anomaly at a reference point in time, and the epoch. The first five parameters can determine an orbital plane (orbital plane parameters), and the other two parameters are used to determine exact satellite location at a time (satellite level parameters). Orbital plane parameters and satellite level parameters are exemplified in Section 7.3.6.1, Representation of Complete Ephemeris Data, of 3GPP TR 38.821 V16.0.0). Another possible option is to provide coordinates of the satellite location (x,y,z), a velocity vector (vx,vy,vz) and a reference point in time.

**Table 2: Elements of Ephemeris**

| | | |
|---|---|---|
| Orbital plane parameters | $\sqrt{a}$ | Square root of semi major axis a (semi-major axis) |
| | e | Eccentricity (eccentricity) |
| | i₀ | Inclination angle at reference time (inclination) |
| | Ω₀ | Longitude of ascending node of orbit plane (right ascension of the ascending node) |
| | ω | Argument of perigee (argument of periapsis) |
| Satellite level parameters | M₀ | Mean anomaly at reference time (true anomaly and a reference point in time) |
| | t₀ₑ | Ephemeris reference time (the epoch) |

In an NTN system, several satellites may share a common orbital plane. In such cases, some ephemeris data may be provided for orbital planes rather than for single satellites, to reduce the amount of data. The ephemeris data per orbital plane may be stored in the UE or in the UE's Subscriber Identity Module (SIM). However, for networks with many satellites, the size of ephemeris data can be rather large. Accordingly, rather than storing the ephemeris data, the ephemeris data may at least partially (or even fully) be transmitted from a gNB.

For instance, satellite level orbital parameters for all satellites that may serve a UE may be stored in the UE or in the SIM, and the ephemeris data for each satellite is linked to a satellite ID or index. The satellite ID or index of the serving satellite may then be broadcast in system information so that the UE can find the corresponding ephemeris data in the UE's SIM or storage. Alternatively, satellite level orbital parameters of the serving satellite may be broadcast in system information and UE will derive the position coordinates of the serving satellite. The ephemeris data of the neighboring satellites can also be provided to UE via system information or dedicated RRC signaling. In case the baseline orbital plane parameters are provisioned in the UE or SIM, it may be sufficient to broadcast the mean anomaly at a reference point in time and the epoch need to be broadcast to UE, so that overhead can be reduced.

For example, satellite operating bands in NTN are given in TS 38.101-5 V18.2.0 by the following table:

**Table 3: NTN satellite operating bands**

| NTN satellite operating band | Uplink (UL) operating band Satellite Access Node receive / UE transmit | Downlink (DL) operating band Satellite Access Node transmit / UE receive | Duplex mode |
|---|---|---|---|
| | F_{UL,low} - F_{UL,high} | F_{DL,low} - F_{DL,high} | |
| n256 | 1980 MHz - 2010 MHz | 2170 MHz - 2200 MHz | FDD |
| n255 | 1626.5 MHz - 1660.5 MHz | 1525 MHz - 1559 MHz | |
| n254 | 1610 - 1626.5 MHz | 2483.5 - 2500 MHz | |

The NTN satellite operating bands are numbered in descending order from n256.

### Beam-hopping

Beam-hopping is a technique which allows a satellite to dynamically switch beams between different coverage areas based on data traffic demands. Instead of continuously supplying data to a fixed area, the satellite can allocate its limited resources more efficiently by "hopping" between areas that need more data traffic at specific times.

Exemplarily, given the parameter sets by RAN1 (beam diameter 50 km, minimum elevation angle 30 degree), the total satellite footprint may be subdivided into 1058 cells. According to the beam-hopping paradigm only a small subset of the 1058 beams will be illuminated at any given time.

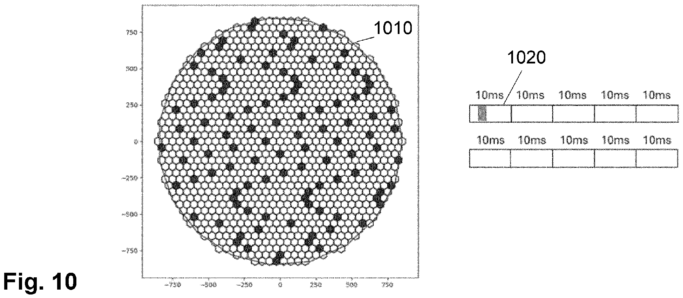

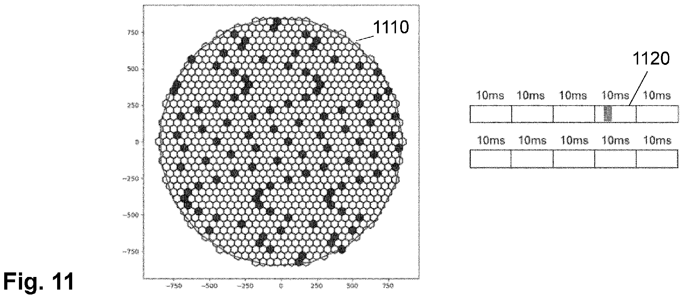

As illustrated in **Fig. 10****,** at a first time a first pattern of cells 1010 is active. The active cells are indicated in a dark shade. At the first time, the SSB has a first position 1020 in a frame. **Fig. 11** illustrates a second pattern of cells 1110 is active at a second time. The active cells are indicated in a dark shade. At the second time, the SSB has a second position 1120 in the frame.

### System information transmission

System information is downlink broadcast information transmitted periodically by a base station (gNB in 5G, in general a network node). It includes information for a UE to establish connection with the base station. In 5G, UE reads system information for cell camping when it is powered on, for cell selection and re-selection when it is in RRC_IDLE mode. System information provides all necessary details such as system frame number, system bandwidth, PLMN, cell selection and re-selection thresholds etc. to access the network.

System information is structured in a Master Information Block (MIB) and System Information Blocks (SIBs). SIBs accommodate various information. For the present disclosure of relevance may be information related to NTN transmission as will be described below. The MIB information is transmitted (broadcasted) via BCH and PBCH channels while SIBs are transmitted via DL-SCH and PDSCH channels.

In general, system information may be transmitted periodically (so that the newly connecting terminals may obtain it) or on demand. The periodic schedule of system information transmission is configurable by RRC. In particular, a SIB1 (which is referred to by MIB) carries scheduling information which specifies e.g. the system information window (repetition period of the system information transmission pattern), some transmission parameters (e.g. physical layer parameters) to receive the system information, and the mapping (transmission pattern) of the SIBs within the system information window.

Such system information may be transmitted in a 5G system, a 6G system, a NTN-system, or the like.

The first signal an UE searches is the synchronization signal block (SSB). The SSB block may be sent on a synchronization raster, which specifies frequencies for receiving an SSB. The SSB block may be sent on one of a sparse set of frequencies according to the synchronization raster. A SSB center frequency SS_REF may be given by a normalized frequency GSCN (Global Synchronization Channel Number).

For a frequency range of 0 - 3000 MHz, the center frequency and the GSCN are given in TS 38.101-5 V18.2.0 as follows

**Table 4: SS_REF and GSCN per frequency range**

| Frequency range | SS Block frequency position SS_{REF} | GSCN | Range of GSCN |
|---|---|---|---|
| 0 - 3000 MHz | N * 1200kHz + M * 50 kHz, N=1:2499, M ∈ {1,3,5} | 3N + (M-3)/2 | 2 - 7498 |

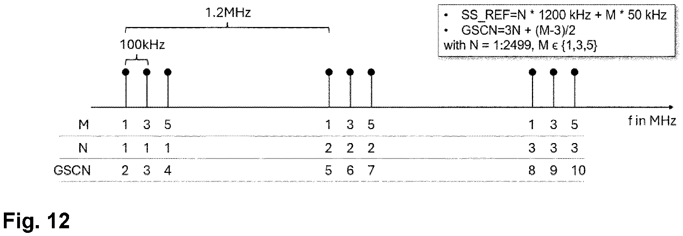

The GSCN as associated with frequencies SS_REF = N * 1200 kHz + M * 50 kHz indicates SSB positions in frequency domain occurring in bundles of three every 1.2MHz. This is exemplarily depicted in **Fig. 12****.** The GSCN is given in terms of the parameters M and N. Each GSCN associated with neighboring N-values, while having a same value of M (such as, for example, GSCN=1 (N=1, M=1) and GSCN=5 (N=2, M=1), or GSCN=6 (N=2, M=3) and GSCN=9 (N=3, M=3), or in general GSCN with (N=n, M=n) and (N=n+1, M=m)), are associated with respective frequencies that differ by 1200 MHz. Each GSCN associated with neighboring M-values, while having a same value of N, are associated with respective frequencies that differ by 100 MHz.

For initial cell selection, according to the control specification TS38.213, UE may assume that SSB is transmitted every 20 ms on one of the previously described synchronization raster points.

With beam hopping, during one SSB period all cells within coverage need to be provided with common control signaling (at least SSB, SIB1, SIB19).

SSBs (Synchronization Signal Blocks) facilitate initial cell access and beamforming. An SSB comprises Primary Synchronization Signal (PSS), Secondary Synchronization Signal (SSS), and Physical Broadcast Channel (PBCH), providing the UE with synchronization, cell identity, and system information. Unlike LTE, 5G uses beamformed SSBs, meaning multiple SSB beams may be transmitted in different directions to improve coverage and signal strength. SSBs are periodically transmitted. These signals help the UE detect and select the best beam for communication, improving connectivity in high-frequency (mmWave) deployments.

SIB1 (System Information Block 1) is a system information block providing network access parameters. It carries the information required for the UE to access the cell e.g., random access parameters. SIB1 includes information regarding the availability and scheduling of other SIBs e.g. mapping of SIBs to SI message, periodicity, Sl-window size etc. SIB1 also indicates whether one or more SIBs are only provided on-demand, in which case, it may also provide PRACH configuration needed by the UE to request for the required SI. SIB1 also includes radio resource configuration information that is common for all UEs and cell barring information applied to the unified access control.

In 5G NR, SIB19 carries information for UE to access Non Terrestrial Network- NTN or 5G Satellite Network. It provides satellite assistance information, for example, Ephemeris data, common timing advance parameters, K-Offset (provides an offset value, may be related to timing or frequency corrections), validity duration for UL synchronization epoch time, cell reference location, cell stop time, or the like.

For Rel.19 NR-NTN, an extended SBB periodicity may be supported to enable illuminating all cells within coverage at least once during one period according to the beam-hopping paradigm. The additional default value may be 160 ms.

To identify a possible SSB transmission, UE attempts to detect the Primary Synchronization Signal (PSS) and Secondary Synchronization Signal (SSS). The PSS helps the UE establish symbol timing, while the SSS provides additional synchronization information, including the physical cell identity (PCI). Successful detection of both signals enables the UE to determine essential timing and frequency synchronization parameters. Once the UE has successfully detected SSB, it may proceed to cell selection and the Random Access Procedure (RACH).

### Embodiments

With multiple candidate SSB periodicities, the following undesirable situation may occur: Rel.19 UE is capable to handle longer SSB periodicity, but potentially may need to perform SSB search twice, once for 20 ms SSB periodicity and once for a longer SSB periodicity. Pre-Rel.19 UE is not capable to handle longer SSB periodicity but anyway performs SSB search in a time window, which is potentially too small. However, explicit signaling of an SSB periodicity, which is different from the default of 20 ms, is not feasible since before detection of SSB UE cannot be signaled anything.

In order to facilitate an efficient reception of an SSB, a configuration for a frequency synchronization raster indicating transmission of SSBs is provided. An UE may perform a scan based on said configuration.

In the following, UEs, base stations, and procedures to meet these needs will be described for the radio access technology used for the 5G mobile communication systems, but which may also be used in LTE mobile communication systems or other communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood as merely examples made herein for illustration purposes that should not limit the scope of the disclosure.

A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user device** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **Non-terrestrial network, NTN, entity** can be broadly understood as an entity of the non-terrestrial network, such as spaceborne vehicles or airborne vehicles, as introduced in the above section relating to NTN. In the following, satellites will be assumed only as an example for such an NTN entity, while it should remain clear that also the other examples of NTN entities are covered.

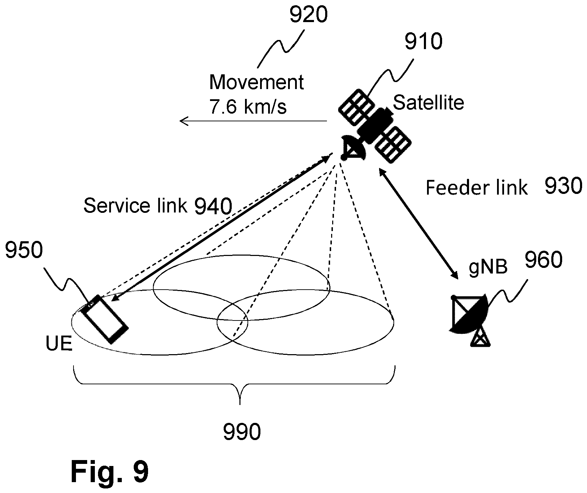

For the following embodiments it is exemplarily assumed that data transmission takes place between the UE, via an NTN entity (e.g. satellite), and a network node. The term **network node** refers to a base station (e.g. gNB) as in Fig. 6 or to another entity with interface to core network (CN), such as the NTN gateway shown in Fig. 7. The scenario already introduced above of Fig. 8 and 9 can be referred to exemplarily in the following. For sake of simplifying the explanation, it is exemplarily assumed that the gateway and gNB (forming the network node) are collocated, thus avoiding a possible physical and logical separation of the gateway and the gNB (base station) in the subsequent explanations. Consequently, in the following, the embodiments will be described as occurring between the UE, the NTN entity, and the gNB, without specifically mentioning that a gateway is located between the NTN entity and the gNB or integrated in the gNB.

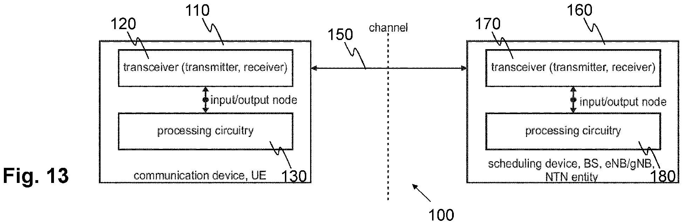

**Fig. 13** illustrates a general, simplified and exemplary block diagram of a user equipment 110 (also termed communication device) and a scheduling device 160 (here exemplarily assumed to be located in the base station, e.g. the eLTE eNB (alternatively termed ng-eNB) or the gNB in 5G NR). The UE 110 and eNB/gNB 160 are communicating with each other over a (wireless) physical channel respectively using the transceiver. The communication is illustrated by an arrow 150. Furthermore, the NTN entity can have the same or similar structure as the scheduling device, e.g. including a transceiver and processing circuitry. Accordingly, the UE 110 and the gNB 160 are part of a communication system 100.

Both devices 110 and 160 may comprise a transceiver 120, 170 and processing circuitry 130, 180. The transceiver 120, 170 in turn may comprise and/or function as a receiver and a transmitter. The processing circuitry 130, 180 may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front end including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto.

The receiver may be responsible for performing the process of receiving and other processes related thereto, such as monitoring a channel.

Different implementations of an improved transmission procedure will be described in the following. In said connection, improved entities, such as improved UEs, improved NTN entities, and improved base stations are presented, which participate in the improved transmission procedure. Corresponding methods for the UE, NTN entity and BS behavior are provided as well.

In the further description, the details, implementations and embodiments apply to each of the user equipment, the network node and the methods unless explicit statement or context indicates otherwise. Moreover, it is noted that any of the steps described below may be included as code instructions in a program, which may be executed by one or more processors (e.g. the circuitry 130 and/or the circuitry 180 in Fig. 13).

According to an embodiment, a user equipment (UE, such as a communication device 110) is provided. The user equipment comprises a receiver (such as included in the transceiver 120 shown in Fig. 13) and circuitry (such as the processing circuitry 130 in Fig. 13).

The circuitry 130, in operation, obtains a configuration for a frequency synchronization raster indicating transmission of SSBs. The configuration indicates a first periodicity for a transmission of SSBs on a first frequency. In addition, the configuration indicates a second periodicity for a transmission of SSBs on a second frequency. The second frequency is different from the first frequency.

The frequency synchronization raster is not limited to two frequencies. In general, the configuration may indicate two or more frequencies for transmission of SSBs. The configuration may indicate a respective periodicity for each frequency of the two or more frequencies. In the present disclosure, the terms "configuration for a frequency synchronization raster", "frequency synchronization raster", and "synchronization raster" are used interchangeably.

For example, the first periodicity and the second periodicity may be the same. For example, the first periodicity may be different from the second periodicity. For example, one or more periodicities may be indicated by the configuration for a respective frequency.

Moreover, the receiver, in operation, scans a resource based on the configuration for receiving a SSB. In other words, according to the configuration, the UE scans a resource. The resource for scanning may be indicated by a frequency and a periodicity in the configuration. For example, in the scanning, the UE may monitor one or more of the (predefined) frequency positions in the configuration to search for potential SSB transmissions. For example, the UE may monitor the first frequency based on the first periodicity. For example, the UE may monitor the second frequency based on the second periodicity. Monitoring a frequency based on a periodicity may include searching an SSB in a window of duration corresponding to the periodicity on said frequency.

In an exemplary implementation, the configuration may include a mapping between a frequency and a periodicity. The frequency in the mapping may be the first frequency or the second frequency and the periodicity in the mapping may be the first periodicity or the second periodicity, respectively. The mapping may be indicated by a table, which maps a frequency to zero or more periodicities. The exemplary table includes that the first frequency is mapped to the first periodicity and the second frequency is mapped to the second periodicity. The table may include at least the mapping for the first frequency and the mapping for the second frequency. However, the table is not limited to two frequencies. In general, the table may indicate for each frequency out of two or more frequencies zero or more periodicities.

In the frequency synchronization raster (in particular, the configuration for the frequency synchronization raster), the first frequency may be indicated by a first global synchronization channel number (GSCN) and the second frequency may be indicated by a second GSCN. In other words, any frequency indicated by the synchronization raster may be given by a corresponding GSCN.

A SSB center frequency SS_REF may be given by a normalized frequency GSCN. More details regarding GSCNs are provided in section *System information transmission* above.

The first periodicity, which may be selected from one or more periodicities, may be mapped to the first frequency. The second periodicity, which may be selected from one or more periodicities, may be mapped to the second frequency. In other words, a periodicity may be picked out of one or more periodicities to be mapped onto a specific frequency. If there is more than one periodicity available, only one may be picked for a mapping onto a frequency. Such a selection (picking) of a periodicity may be performed when the UE is preconfigured with a configuration. Alternatively, such a selection (picking) of a periodicity may be performed when the UE obtains the configuration, in particular, when the UE selects a frequency for scanning for SSBs. The UE may obtain the configuration through provisioning it in either the SIM-card or the device firmware.

The UE may obtain such a configuration by being pre-configured with said configuration. In other words, the UE may obtain a pre-configured configuration for a frequency synchronization raster indicating transmission of SSBs. Such a pre-configuration may be performed for any of the first to fifth exemplary implementations for a configuration for a frequency synchronization raster as described in the following. The pre-configuration may be given, for example, by a standard, or the like. The UE may receive an update to the pre-configured configuration when the UE is connected to a network.

A mapping of a periodicity to a frequency in such a pre-configuration may be performed based on a geographical region for using the UE. Periodicities may depend on location (region area, country, province, or the like). Different configurations (e.g. such as mappings and/or tables) may be defined for different locations for using an UE. For example, the UE may be preconfigured with a first configuration for use in Asia. Moreover, the UE may be preconfigured with a second configuration for use of the UE in Europe. Moreover, the UE may be preconfigured with a third configuration for use of the UE in North America. The present disclosure is not limited to these exemplary regional mappings. For example, the UE may be preconfigured with a subset of the exemplary first to third configurations. For example, the UE may be preconfigured with configurations in addition to any of the exemplary first to third configuration. Moreover, the present disclosure is not limited to the exemplary geographical regions above; in general, the UE may be preconfigured on the level of region areas, countries, provinces, or the like. Such a pre-configuration based on a geographical region may be performed for any of the first to fifth exemplary implementations for a configuration for a frequency synchronization raster as described in the following.

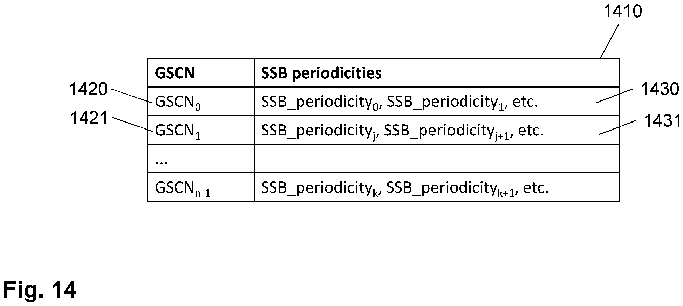

**Fig. 14** illustrates a first exemplary implementation for a configuration 1410 for a synchronization raster. In the example of Fig. 14, each GSCN is mapped in a table to zero or more periodicities. For example, some GSCNs may be mapped to a same group of periodicities. For example, a first frequency 1420 is mapped to (at least) a first periodicity 1430 (e.g. a periodicity out of "SSB_periodicity₀, SSB_periodicity₁, etc."). For example, a second frequency 1421 is mapped to (at least) a second periodicity 1431 (e.g. a periodicity out of "SSB_periodicityⱼ, SSB_periodicityⱼ₊₁, etc."). The UE may obtain such a table by a pre-configuration. In other words, the UE knows (due to the pre-configuration) where to scan for SSBs in which periodicity. The network node also knows about the exemplary configuration for the synchronization raster, and transmits the SSBs accordingly. For example, in a table such as shown in Fig. 14, SSB periodicities in each row may be different between rows. For example, in a table such as shown in Fig. 14, SSB periodicities in a first row may be the same as SSB periodicities in a second row. In general, each GSCN may be associated with zero or more SSB periodicities. A preconfigured table as depicted in Fig. 14 provides a comprehensive way of indicating zero or more periodicities for each frequency included in the table for the configuration.

In case two or more periodicities are mapped to a frequency, each of the two or more periodicities may be an integer multiple of a minimum periodicity out of the two or more periodicities.ln an exemplary implementation, the receiver uses multiple adjacent detection windows. During each detection window (e.g. a scanning for SSBs), the receiver correlates the received signal with SSB candidates. The cross-correlation signals may be combined across detection windows to improve detection performance. In this context, the integer relationship facilities that SSBs occur at the same position relative to the start of all detection windows. By extension, any correlation peak from a single detection window may occur at the same position within the compound cross-correlation result.

In a second exemplary implementation for a configuration for a frequency synchronization raster, the first periodicity is mapped to integer multiples of the first GSCN, and the second periodicity is mapped to integer multiples of the second GSCN. The first GSCN indicates the first frequency and the second GSCN indicates the second frequency. The second GSCN is different from the first GSCN in the second exemplary implementation.

In addition, a third (or any subsequent) periodicity may be mapped to integer multiples of a third (or any respective subsequent) GSCN. The third GSCN may be different from each of the first GSCN and the second GSCN.

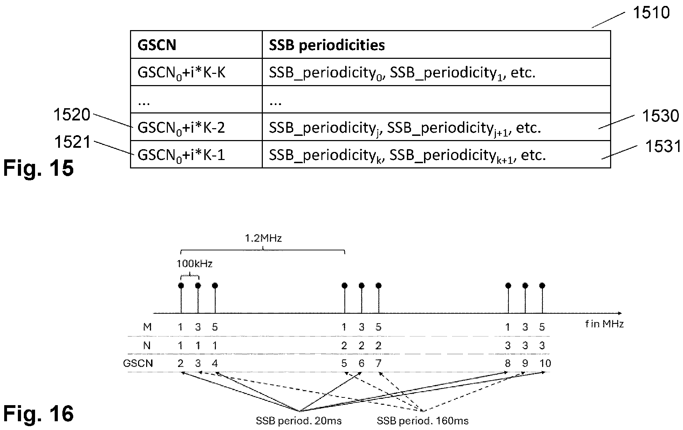

**Fig. 15** illustrates an example for the second exemplary implementation for a configuration 1510 for a synchronization raster. In the example of Fig. 15, a same set of (one or more) SSB periodicities is assigned to integer multiples i of each K-th GSCN. The integer i is larger than 0, and K is an integer larger than 1. For example, a first set of SSB periodicities is mapped to *GSCN*₀ + *i* * *K* - 1, a second set of SSB periodicities is mapped to *GSCN*₀ + *i* * *K* - 2, a (K-1)-th set of SSB periodicities is mapped to *GSCN*₀ + *i * K* - *K.* The K sets of SSB periodicities may each include the same SSB periodicities, may each include one or more mutually different SSB periodicities, or may each include a subset of same SSB periodicities and one or more mutually different SSB periodicities. For example, a first frequency 1520 is mapped to (at least) a first periodicity 1530 (e.g. a periodicity out of "SSB_periodicityⱼ, SSB_periodicityⱼ₊₁, etc."). For example, a second frequency 1521 is mapped to (at least) a second periodicity 1531 (e.g. a periodicity out of "SSB_periodicityₖ, SSB_periodicityₖ₊₁, etc.").

**Fig. 16** illustrates such an exemplary synchronization raster for the second exemplary configuration with K=2. For example, for K=2, a first periodicity (e.g. 20 ms in Fig. 16) may be mapped to *GSCN*₀ + 2*i* - 2, and a second periodicity (e.g. 160 ms in Fig. 16) may be mapped to *GSCN*₀ + 2*i* - 1. In other words, for K=2 each odd GSCN is mapped to a first set of one or more periodicities, and each even GSCN is mapped to a second set of one or more periodicities.

In the second exemplary implementation, the integer K indicates a number of different "basis-GSCNs", of which integer multiples i are mapped to a same periodicity. The integer multiples i of the K basis-GSCNs may be mapped to a same set of one or more periodicities. As shown in the example of Fig. 16, for K=2, there are two basis-GSCNs: *GSCN*₀ and *GSCN*₀ + 1. For K=3, there are three basis-GSCNs: *GSCN*₀, *GSCN*₀ + 1 and *GSCN*₀ + 2. However, the second exemplary implementation is not limited to these exemplary values of K.

In a third exemplary implementation for a configuration for a frequency synchronization raster, a GSCN, which indicates a frequency of the frequency synchronization raster, is obtained as a function of a first parameter N, which indicates an offset between two sets of GSCNs, and a second parameter M, which indicates an offset between two GSCNs within a set of GSCNs. N and M are positive integers. In other words, GSCNs within a set have a same value of N and different values of M. For example, the GSCN is given as a function of the parameters N and M.

For example, the GSCN may be given as *GSCN =* 3*N* + (*M* - 3)/2 for an exemplary frequency of *SS_{REF} = N ** 1200*kHz* + *M* * 50 *kHz.* However, the GSCN may be given by any other suitable mapping to a frequency *SS_{REF}.*

In the third exemplary implementation, the first periodicity is mapped to integer multiples of a first value of N, the second periodicity is mapped to integer multiples of a second value of N, wherein the second value of N is different from the first value of N. The first value of N indicates a first GSCN indicating the first frequency. The second value of N indicates a second GSCN indicating the second frequency.

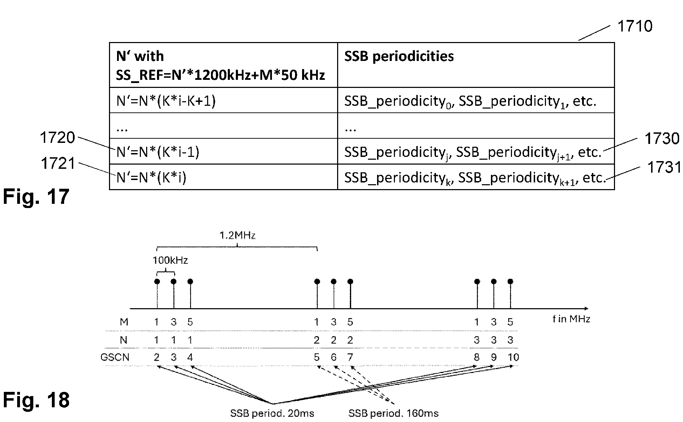

**Fig. 17** illustrates an example for the third exemplary implementation for a configuration 1710 for a synchronization raster. In the example of Fig. 17, when a frequency of the synchronization raster is given as *SS_REF = N* * 1200 *kHz* + *M* * 50 *kHz,* a same set of (one or more) SSP periodicities is mapped to integer multiples i of each K-th value of the parameter N in the formula of SS_REF. The integer i is larger than 0, and K is an integer larger than 0.

For example, a first set of SSB periodicities is mapped to a frequency *SS_REF = N'* * 1200 *kHz* + *M* * 50 *kHz* (or a corresponding GSCN) of a value of *N' = N* * (*K* * i), a second set of SSB periodicities is mapped to frequency *SS_REF* (or a corresponding GSCN) of a value of *N' = N* * (*K* * *i -* 1)*,* a (K-1)-th set of SSB periodicities is mapped to *SS_REF* (or a corresponding GSCN) of a value of *N' = N* * (*K* * *i* - *K* + 1). The K sets of SSB periodicities may each include the same SSB periodicities, may each include one or more mutually different SSB periodicities, or may each include a subset of same SSB periodicities and one or more mutually different SSB periodicities. For example, a first frequency 1720 is mapped to (at least) a first periodicity 1730 (e.g. a periodicity out of "SSB_periodicity₀, SSB_periodicity₁, etc."). For example, a second frequency 1721 is mapped to (at least) a second periodicity 1731 (e.g. a periodicity out of "SSB_periodicityⱼ, SSB_periodicityⱼ₊₁, etc.").

**Fig. 18** illustrates such an exemplary synchronization raster for the third exemplary configuration with K=2. For example, for K=2, a first periodicity (e.g. 20 ms in Fig. 18) may be mapped to *N'* = *N*(2 * *i -* 1)*,* and a second periodicity (e.g. 160 ms in Fig. 16) may be mapped to *N'* * (2 * *i*). In other words, for K=2 each GSCN of an odd N' is mapped to a first set of one or more periodicities, and each GSCN of an even N' is mapped to a second set of one or more periodicities.

For a frequency synchronization raster with frequencies of *SS_REF = N* * 1200 *kHz* + *M* * 50 *kHz,* each value of N indicates a set or group of frequencies, of which each two neighboring sets are spaced by 1.2 MHz. In each set or group (i.e. frequencies for a same value of N), the frequencies having subsequent values of M within said set or group are spaced by 100kHz with *M* ∈ {1,3,5}.

With M in {1,3,5} groups (sets) of three synchronization frequencies will be associated with the same SSB periodicities. By grouping synchronization raster points, an UE may efficiently search for and acquire synchronization signals within a certain time/frequency window.

In a fourth exemplary implementation for a configuration for a frequency synchronization raster, a GSCN, which indicates a frequency of the frequency synchronization raster, is obtained as a function of a first parameter N, which indicates an offset between two sets of GSCNs, and a second parameter M, which indicates an offset between two GSCNs within a set of GSCNs. N and M are positive integers. In other words, GSCNs within a set have a same value of N and different values of M. For example, the GSCN is given as a function of the parameters N and M.

For example, the GSCN may be given as *GSCN = 3*N + (*M* - 3)/2 for an exemplary frequency of *SS_{REF} = N * 1200kHz* + *M* * 50 *kHz.* However, the GSCN may be given by any other suitable mapping to a frequency *SS_{REF}.*

In the fourth exemplary implementation, a first set of values of M is mapped to the first periodicity. For example, the first set of values corresponds to {1,3,5}. In other words, GSCNs with *M* e {1,3,5} are mapped to the first periodicity. The values *M* e {1,3,5} correspond to the legacy values of M in TS 38.101-5 V18.2.0. However, the present disclosure is not limited to such a first set of values of M. Any other set of values of M may be mapped to the first periodicity.

In the fourth exemplary implementation, another value of M outside of the first set is mapped to the second periodicity. For example, in case the first set of values corresponds to {1,3,5}, the second periodicity is mapped to a value of M, which is not 1, 3 or 5.

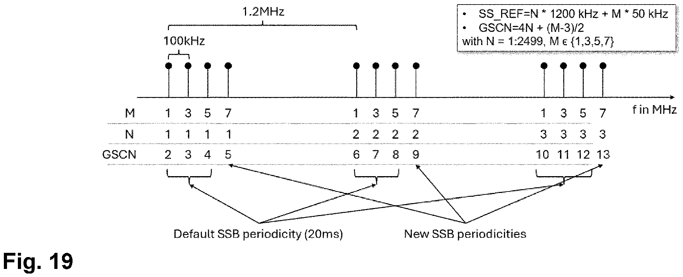

**Fig. 19** illustrates an exemplary synchronization raster for the fourth exemplary implementation of a configuration. In the fourth exemplary implementation, values of M in addition to {1,3,5} are associated with different SSB periodicities. For example, as shown in Fig. 19, a first periodicity (e.g. 20 ms in Fig. 19) is mapped to the frequencies (GSCNs) having values or M in {1,3,5}. A second periodicity (e.g. 160 ms) is mapped to additional values of M (e.g. M=7 in Fig. 19).

A legacy UE may find SSB on the legacy raster points (M in {1,3,5}) with a default SSB periodicity. A non-legacy UE may be pre-configured with the additional SSB periodicities on the additional raster points (e.g. such as M=7).

Additional values for M may change the GSCN formula (in the example of Fig. 19 from *GSCN =* 3*N* + (*M* - 3)/2 to *GSCN* = 4*N* + (*M* - 3)/2). With such a mapping of M-values to the respective periodicities, legacy raster points (i.e. *M* e {1,3,5}) remain at their original frequency. Thus, such a fourth exemplary configuration avoids a conflict with the legacy default SSB-periodicity.

Usually the number of additional values for M will be small (e.g. 1 or 2 additional values for M). Note that in the fourth exemplary configuration, a maximum set size for values of M is 12, i.e., M in {1,3,5,...,21,23}. Based on the formula for SS_REF, a maximum value for M=2m+1 may be obtained: ${SS}_{REF} = N ⋅ 1200 kHz + \left(2m+1\right) 50 kHz ⇒ {m}_{max} = \left⌊\frac{\frac{1200}{50} - 1}{2}\right⌋ = 11$

In other words, the spacing of the sets or groups of GSCNs by 1200 kHz due to the term N · *1200kHz* limits the number of values for M.

In a fifth exemplary implementation for a configuration for a frequency synchronization raster, the mapping of a periodicity to a frequency is based on the frequency band including said frequency. A first periodicity and a second periodicity are mapped (assigned) to a first frequency (first GSCN) in a first frequency band. Moreover, the first periodicity and the second periodicity are mapped to a second frequency (second GSCN) in a first frequency band. The first periodicity is different from the second periodicity in the fifth exemplary implementation. Moreover, in the fifth exemplary implementation, a third periodicity is mapped to a third frequency (third GSCN) in a second frequency band. The third frequency is different from each of the first frequency or the second frequency. The first frequency band and the second frequency band may be overlapping or non-overlapping.

In general, the first frequency band may include two or more frequencies in the frequency synchronization raster. Each of those two or more frequencies in the first frequency band may be associated with a same set of one or more periodicities. The second frequency band may include one or more frequencies in the frequency synchronization raster. Each of those one or more frequencies in the second frequency band may be associated with a same set of one or more periodicities. Multiple SSB periodicities may be dependent on the frequency band. In other words, all GSCNs in a frequency band may be operated with the same set of SSB periodicities.

A UE, which obtains a configuration for a frequency synchronization raster as explained above, in particular the circuitry, may further determine for a GSCN, which indicates a frequency, a maximum periodicity based on the configuration. Moreover, the UE, in particular, the receiver further searches for a SSB in a window of a duration of the maximum periodicity on a frequency indicated by the GSCN.

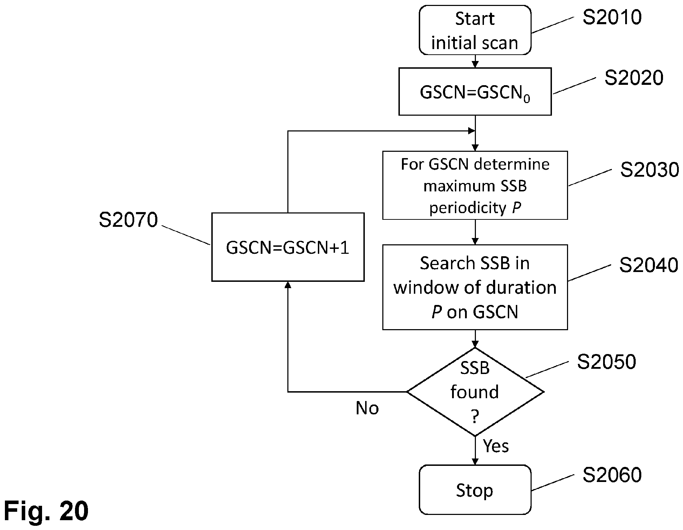

**Fig. 20** shows exemplary steps for a UE to obtain an SSB based on a frequency synchronization raster including multiple periodicities. The UE starts S2010 an initial scan for SSBs. The UE starts S2020 the scan at a frequency corresponding to GSCN₀. For the GSCN, the UE determines S2030 a maximum periodicity P. The UE searches S2040 an SSB in window of duration *P* on GSCN. In case an SSB is found ("Yes" in S2050), the UE stops S2060 the process. In case no SSB is found ("No" in S2050), the UE increases S2070 the GSCN by 1 and repeats steps S2030 to S2050.

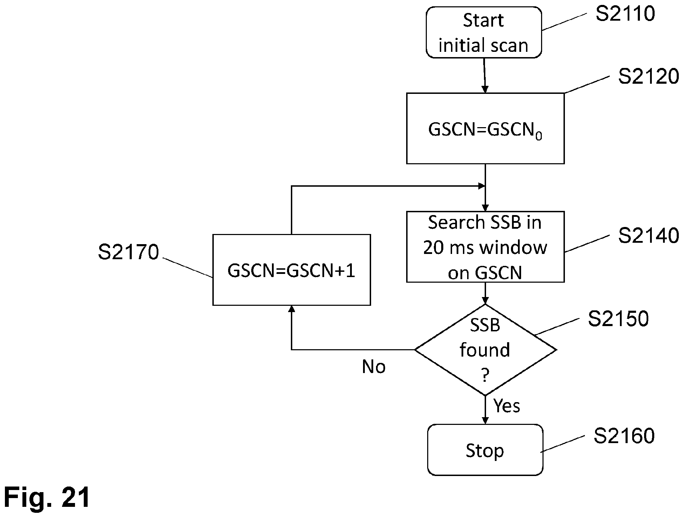

**Fig. 21** shows exemplary steps for a legacy UE to obtain an SSB based on a legacy periodicity of 20 ms. The UE starts S2110 an initial scan for SSBs. The UE starts S2120 the scan at a frequency corresponding to GSCN₀. The UE searches S2140 an SSB in a 20 ms window on GSCN. In case an SSB is found ("Yes" in S2150), the UE stops S2160 the process. In case no SSB is found ("No" in S2150), the UE increases S2170 the GSCN by 1 and repeats steps S2140 to S2150. The exemplary legacy periodicity is not limited to the value of 20 ms. The steps of Fig. 21 are analogous for any other value of the periodicity.

Any of the above-described configurations for a frequency synchronization raster may be applied in the context of 5G NR, 6G, NR-NTN, or similar standards.

The UE, in particular, the receiver may scan the resource based on the configuration for receiving a SSB via a non-terrestrial network (NTN). In other words, the SSB may be transmitted over a NTN.

According to an embodiment, a network node (such as BS 160 in Fig. 13) is provided. The network node comprises a transmitter (such as included in the transceiver 170 shown in Fig. 13) and circuitry (such as the processing circuitry 180 in Fig. 13).

The circuitry 180, in operation, obtains a configuration for a frequency synchronization raster indicating transmission of SSBs. The configuration indicates a first periodicity for a transmission of SSBs on a first frequency. In addition, the configuration indicates a second periodicity for a transmission of SSBs on a second frequency. The second frequency is different from the first frequency.

The frequency synchronization raster is not limited to two frequencies. In general, the configuration may indicate two or more frequencies transmission of SSBs. The configuration may indicate a respective periodicity for each frequency of the two or more frequencies.

For example, the first periodicity and the second periodicity may be the same. For example, the first periodicity may be different from the second periodicity. For example, one or more periodicities may be indicated by the configuration for a respective frequency.

Moreover, the transmitter, in operation, transmits a SSB on the first frequency with the first periodicity and transmits a SSB on the second frequency with the second periodicity based on the configuration for the synchronization raster.

For example, the network node may transmit the SSB via a non-terrestrial network. For example, the network node may transmit the SSB via a terrestrial network.

For example, such a configuration maybe pre-configured by a standard. For example, such a configuration may be configured by the network.

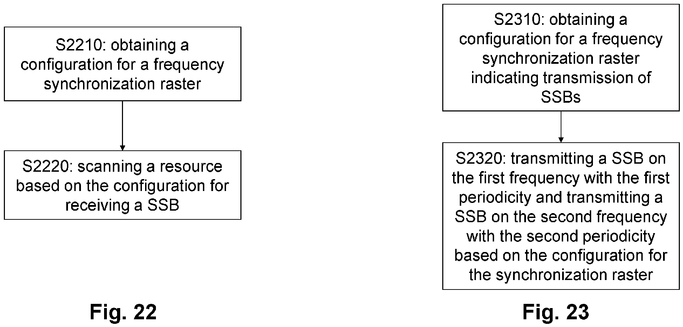

In correspondence with the above-described UE, a method for scanning for a SSB by a user equipment is provided. As shown in **Fig. 22****,** the method comprises the steps of:
- obtaining (S2210) a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and
- scanning (S2220) a resource based on the configuration for receiving a SSB.

In correspondence with the above-described network node, a method for transmitting a SSB by a network node is provided. As shown in **Fig. 23****,** the method comprises the steps of:
- obtaining (S2310) a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency wherein the second frequency is different from the first frequency; and
- transmitting (S2320) a SSB on the first frequency with the first periodicity and transmitting a SSB on the second frequency with the second periodicity based on the configuration for the synchronization raster.

As already mentioned above, any of the details and exemplary implementations, which are described with reference to the UE may also be applied to the corresponding method for scanning for a SSB by a user equipment as well as by the network node and the corresponding method for transmitting a SSB by a network node unless indicated otherwise.

The present disclosure can be realized by software, hardware, or software in cooperation with hardware. Each functional block used in the description of each embodiment described above can be partly or entirely realized by an LSI (large scale integration) such as an integrated circuit (IC), and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other component(s) in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Summary of embodiments

According to a first aspect, a user equipment (UE) is provided. The UE comprises a receiver and circuitry. The circuitry, which in operation: obtains a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency. The receiver, which in operation: scans a resource based on the configuration for receiving a SSB.

According to a second aspect provided in addition to the first aspect, the configuration includes a mapping between a frequency and a periodicity, wherein the frequency is the first frequency or the second frequency and the periodicity is the first periodicity or the second periodicity, respectively.

According to a third aspect provided in addition to any of the first or second aspects, the first frequency is indicated by a first global synchronization channel number, GSCN, and the second frequency is indicated by a second GSCN.

According to a fourth aspect provided in addition to any of the first to third aspects, the first periodicity, selected from one or more periodicities, is mapped to the first frequency, and the second periodicity, selected from one or more periodicities, is mapped to the second frequency.

According to a fifth aspect provided in addition to any of the third or fourth aspects, the first periodicity is mapped to integer multiples of the first GSCN, and the second periodicity is mapped to integer multiples of the second GSCN, wherein the second GSCN is different from the first GSCN.

According to a sixth aspect provided in addition to any of the first to fourth aspects, a GSCN is obtained as a function of a first parameter N, which indicates an offset between two sets of GSCNs, and a second parameter M, which indicates an offset between two GSCNs within a set of GSCNs, wherein N and M are positive integers, and the first periodicity is mapped to integer multiples of a first value of N, the second periodicity is mapped to integer multiples of a second value of N, wherein the second value of N is different from the first value of N.

According to a seventh aspect provided in addition to any of the first to fourth aspects, the GSCN is obtained as a function of a first parameter N, which indicates an offset between two sets of GSCNs, and a second parameter M, which indicates an offset between two GSCNs within a set of GSCNs, and wherein a first set of values of M is mapped to the first periodicity and another value of M outside of the first set is mapped to the second periodicity.

According to an eighth aspect provided in addition to any of the first to fourth aspects, the mapping of a periodicity to a frequency is based on the frequency band including said frequency.

According to a ninth aspect provided in addition to any of the first to eighth aspects, the configuration for the frequency synchronization raster is pre-configured, and the mapping of a periodicity to a frequency in the pre-configuration is performed based on a geographical region for using the UE.

According to a tenth aspect provided in addition to any of the first to ninth aspects, in case two or more periodicities are mapped to a frequency, each of the two or more periodicities is an integer multiple of a minimum periodicity out of the two or more periodicities.

According to a eleventh aspect provided in addition to any of the first to tenth aspects, the circuitry, in operation, further determines for a GSCN indicating a frequency a maximum periodicity based on the configuration, and the receiver, in operation, further searches for a SSB in a window of a duration of the maximum periodicity on a frequency indicated by the GSCN.

According to a twelfth aspect provided in addition to any of the first to eleventh aspects, the receiver which, in operation, scans the resource based on the configuration for receiving a SSB via a non-terrestrial network.

According to a thirteenth aspect, a network node is provided. The network node comprises a transmitter and a circuitry. The circuitry, in operation: obtains a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency wherein the second frequency is different from the first frequency. The transmitter, in operation: transmits a SSB on the first frequency with the first periodicity and transmits a SSB on the second frequency with the second periodicity based on the configuration for the synchronization raster.

According to a fourteenth aspect provided in addition to the thirteenth aspect, the configuration includes a mapping between a frequency and a periodicity, wherein the frequency is the first frequency or the second frequency and the periodicity is the first periodicity or the second periodicity, respectively.

According to a fifteenth aspect provided in addition to any of the thirteenth or second aspects, the first frequency is indicated by a first global synchronization channel number, GSCN, and the second frequency is indicated by a second GSCN.

According to a sixteenth aspect provided in addition to any of the first to fifteenth aspects, the first periodicity, selected from one or more periodicities, is mapped to the first frequency, and the second periodicity, selected from one or more periodicities, is mapped to the second frequency.

According to a seventeenth aspect provided in addition to any of the fifteenth or sixteenth aspects, the first periodicity is mapped to integer multiples of the first GSCN, and the second periodicity is mapped to integer multiples of the second GSCN, wherein the second GSCN is different from the first GSCN.

According to an eighteenth aspect provided in addition to any of the thirteenth to sixteenth aspects, a GSCN is obtained as a function of a first parameter N, which indicates an offset between two sets of GSCNs, and a second parameter M, which indicates an offset between two GSCNs within a set of GSCNs, wherein N and M are positive integers, and the first periodicity is mapped to integer multiples of a first value of N, the second periodicity is mapped to integer multiples of a second value of N, wherein the second value of N is different from the first value of N.

According to a nineteenth aspect provided in addition to any of the thirteenth to sixteenth aspects, the GSCN is obtained as a function of a first parameter N, which indicates an offset between two sets of GSCNs, and a second parameter M, which indicates an offset between two GSCNs within a set of GSCNs, and wherein a first set of values of M is mapped to the first periodicity and another value of M outside of the first set is mapped to the second periodicity.

According to a twentieth aspect provided in addition to any of the thirteenth to sixteenth aspects, the mapping of a periodicity to a frequency is based on the frequency band including said frequency.

According to a twenty-first aspect provided in addition to any of the thirteenth to twentieth aspects, the configuration for the frequency synchronization raster is pre-configured, and the mapping of a periodicity to a frequency in the pre-configuration is performed based on a geographical region for using the UE.

According to a twenty-second aspect provided in addition to any of the thirteenth to twenty-first aspects, in case two or more periodicities are mapped to a frequency, each of the two or more periodicities is an integer multiple of a minimum periodicity out of the two or more periodicities.

According to a twenty-third aspect provided in addition to any of the thirteenth to twenty-second aspects, the SSB is transmitted via a non-terrestrial network.

According to a twenty-fourth aspect, a method for a user equipment, UE, is provided. The method comprises: obtaining a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and scanning a resource based on the configuration for receiving a SSB.

According to a twenty-fifth aspect, a method for a network node is provided. The method comprises: obtaining a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency wherein the second frequency is different from the first frequency; and transmitting a SSB on the first frequency with the first periodicity and transmitting a SSB on the second frequency with the second periodicity based on the configuration for the synchronization raster.

According to a twenty-sixth aspect, an integrated circuit is provided, which, in operation, controls a process of a user equipment, the process comprising the following steps performed by the user equipment: obtaining a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and scanning a resource based on the configuration for receiving a SSB.

According to a twenty-seventh aspect an integrated circuit is provided, which, in operation, controls a process of a network node, the process comprising the following steps performed by the network node: obtaining a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency wherein the second frequency is different from the first frequency; and transmitting a SSB on the first frequency with the first periodicity and transmitting a SSB on the second frequency with the second periodicity based on the configuration for the synchronization raster.

According to a twenty-eighth aspect, a program stored on a storage medium and including code instructions, which, when executed on one or more processors of a user equipment, cause the one or more processors to execute the following steps: obtaining a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and scanning a resource based on the configuration for receiving a SSB.

According to a twenty-ninth aspect, a program stored on a storage medium and including code instructions, which, when executed on one or more processors of a network node, cause the one or more processors to execute the following steps: obtaining a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency wherein the second frequency is different from the first frequency; and transmitting a SSB on the first frequency with the first periodicity and transmitting a SSB on the second frequency with the second periodicity based on the configuration for the synchronization raster.

Summarizing, the disclosure relates to a user equipment, UE, and respective methods for the UE. Moreover, a network node and respective methods for the network node are provided. The UE comprises: circuitry which, in operation: obtains a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and a receiver, which, in operation, scans a resource based on the configuration for receiving a SSB.

## Claims

1. A user equipment, UE, comprising:
circuitry which, in operation:
obtains a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and
a receiver, which, in operation,
scans a resource based on the configuration for receiving a SSB.

2. The UE according to claim 1, wherein the configuration includes a mapping between a frequency and a periodicity, wherein the frequency is the first frequency or the second frequency and the periodicity is the first periodicity or the second periodicity, respectively.

3. The UE according to any of claims 1 or 2, wherein the first frequency is indicated by a first global synchronization channel number, GSCN, and the second frequency is indicated by a second GSCN.

4. The UE according to any of claims 1 to 3, wherein the first periodicity, selected from one or more periodicities, is mapped to the first frequency, and the second periodicity, selected from one or more periodicities, is mapped to the second frequency.

5. The UE according to any of claims 3 to 4, wherein the first periodicity is mapped to integer multiples of the first GSCN, and the second periodicity is mapped to integer multiples of the second GSCN, wherein the second GSCN is different from the first GSCN.

6. The UE according to any of claims 1 to 4, wherein
a GSCN is obtained as a function of a first parameter N, which indicates an offset between two sets of GSCNs, and a second parameter M, which indicates an offset between two GSCNs within a set of GSCNs, wherein N and M are positive integers, and
the first periodicity is mapped to integer multiples of a first value of N, the second periodicity is mapped to integer multiples of a second value of N, wherein the second value of N is different from the first value of N.

7. The UE according to any of claims 1 to 4, wherein
the GSCN is obtained as a function of a first parameter N, which indicates an offset between two sets of GSCNs, and a second parameter M, which indicates an offset between two GSCNs within a set of GSCNs, and
wherein a first set of values of M is mapped to the first periodicity and another value of M outside of the first set is mapped to the second periodicity.

8. The UE according to any of claims 1 to 4, wherein
the mapping of a periodicity to a frequency is based on the frequency band including said frequency.

9. The UE according to any of claims 1 to 8, wherein
the configuration for the frequency synchronization raster is pre-configured, and
the mapping of a periodicity to a frequency in the pre-configuration is performed based on a geographical region for using the UE.

10. The UE according to any of claims 1 to 9, wherein in case two or more periodicities are mapped to a frequency, each of the two or more periodicities is an integer multiple of a minimum periodicity out of the two or more periodicities.

11. The UE according to any of claims 1 to 10, wherein the receiver which, in operation, scans the resource based on the configuration for receiving a SSB via a non-terrestrial network.

12. A network node, comprising:
circuitry which, in operation:
obtains a configuration for a synchronization raster indicating transmission of Synchronization Signal Blocks, SSBs, wherein the configuration indicates a first periodicity for a transmission of SSBs on a first frequency and a second periodicity for a transmission of SSBs on a second frequency wherein the second frequency is different from the first frequency; and
a transmitter which, in operation,
transmits a SSB on the first frequency with the first periodicity and transmits a SSB on the second frequency with the second periodicity based on the configuration for the synchronization raster.

13. The network node according to claim 12, wherein the SSB is transmitted via a non-terrestrial network.

14. A method for a user equipment, UE, comprising:
obtaining a configuration for a frequency synchronization raster indicating transmission of Synchronization Signal Blocks, SSBs, wherein the configuration indicates a first periodicity for a transmission of SSBs on a first frequency and a second periodicity for a transmission of SSBs on a second frequency, wherein the second frequency is different from the first frequency; and
scanning a resource based on the configuration for receiving a SSB.

15. A method for a network node, comprising:
obtaining a configuration for a synchronization raster indicating transmission of Synchronization Signal Blocks, SSBs, wherein the configuration indicates a first periodicity for a transmission of SSBs on a first frequency and a second periodicity for a transmission of SSBs on a second frequency wherein the second frequency is different from the first frequency; and
transmitting a SSB on the first frequency with the first periodicity and transmitting a SSB on the second frequency with the second periodicity based on the configuration for the synchronization raster.
